# EUROPÄISCHE PATENTSCHRIFT

(11) **EP 0 495 798 B1**
(45) Veröffentlichungstag und Bekanntmachung des Hinweises auf die Patenterteilung: **25.05.1994**
(21) Anmeldenummer: 90913791.1
(22) Anmeldetag: 29.09.1990
(51) Int. Cl.: G01N 27/407

(54) **ELEKTROCHEMISCHER MESSFÜHLER FÜR DIE BESTIMMUNG DES SAUERSTOFFGEHALTES IN GASEN**
ELECTRO-CHEMICAL MEASURING SENSOR FOR DETERMINING THE OXYGEN CONTENT OF GASES
CAPTEUR ELECTROCHIMIQUE POUR LA DETERMINATION DE LA TENEUR EN OXYGENE DANS DES GAZ

(30) Priorität: 17.10.1989 DE 3934586
(43) Veröffentlichungstag der Anmeldung: 29.07.1992
(73) Patentinhaber: ROBERT BOSCH GMBH, 70442 Stuttgart (DE)
(72) Erfinder: FRIESE, Karl-Hermann, D-7250 Leonberg (DE); WEYL, Helmut, D-7141 Schwieberdingen (DE); WIEDENMANN, Hans-Martin, D-7000 Stuttgart 1 (DE)
(86) Internationale Anmeldenummer: DE9000746
(87) Internationale Veröffentlichungsnummer: WO9106002

(56) Entgegenhaltungen:
- DE-C- 2 311 165
- US-A- 4 402 820

## Beschreibung

### Stand der Technik

Die Erfindung geht aus von einem elektrochemischen Meßfühler für die Bestimmung des Sauerstoffgehaltes in Gasen nach der Gattung des Hauptanspruchs.

Es ist allgemein bekannt, z. B. aus den DE-PS 22 06 216, 28 52 638 und 26 19 746 sowie der DE-OS 29 13 633, zur Bestimmung des Sauerstoffgehaltes in Gasen, insbesondere in Abgasen von Verbrennungsmotoren, elektrochemische Meßfühler - oftmals auch als Gassensoren bezeichnet - aus einem Festelektrolyten, beispielsweise stabilisiertem Zirkondioxid, und einer ersten Elektrode auf der dem zu messenden Gas ausgesetzten Seite des Festelektrolyten und einer zweiten Elektrode auf der einem Vergleichsgas bekannten Sauerstoffgehaltes ausgesetzten Seite des Festelektrolyten sowie einer porös keramischen Schutzschicht auf der dem zu messenden Gas ausgesetzten ersten Elektrode zu verwenden.

Aus der DE-PS 28 52 638 und der DE-OS 29 13 633 ist es ferner bekannt, als Elektroden, die dem zu messenden Gas ausgesetzt sind, Elektroden aus einem feinteiligen Keramikmaterial zur Bildung eines Stützgerüstes und einem feinteiligen elektronenleitenden Material, sog. Cermet-Elektroden, zu verwenden. Das zur Ausbildung des Stützgerüstes verwendete feinteilige keramische Material kann dabei beispielsweise aus stabilisiertem Zirkondioxid oder Aluminiumoxid bestehen und das feinteilige elektronenleitende Material z. B. aus Platin, einer Platinlegierung, z. B. Platin-Rhodiumlegierung oder einer Palladium-Edelmetall-Legierung.

Aus der DE-PS 28 52 638 ist es ferner bekannt, den Meßfühlerkörper aus teilstabilisiertem Zirkondioxid und das Stützgerüst der Cermet-Elektrode aus vollstabilisiertem Zirkondioxid herzustellen.

Aus der DE-OS 37 37 215 ist es weiterhin bekannt, auf die dem zu messenden Gas ausgesetzte Elektrode eine poröse keramische Schutzschicht aus einer Al₂O₃- und/oder Mg-Spinell (MgO·Al₂O₃)-Matrix mit darin eingelagerten ZrO₂-Partikeln aufzubringen.

Aus der DE-OS 37 35 298 ist es schließlich bekannt, auf die Zuleitung der dem zu messenden Gas ausgesetzte Elektrode eines elektrochemischen Meßfühlers mit einem aus einem Festelektrolyten gebildeten Sondenstein eine dicht sinternde Deckschicht aus der Rohstoffmischung der Sondensteinkeramik mit gleicher oder erhöhter Sinteraktivitiät aufzubringen. Diese Deckschicht hat den Vorteil, daß sie vor dem Sinterprozeß auf die Leiterbahn aufgetragen werden kann und die Leiterbahn so hermetisch abdeckt, daß ein störungsfreier Dauerbetrieb des Meßfühlers auch in sehr fetten Abgasen (λ ≦ 0,8) bei hohen Temperaturen unter starker Rußbildung möglich ist.

### Vorteile der Erfindung

Ein elektrochemischer Meßfühler mit den kennzeichnenden Merkmalen des Hauptanspruchs weist gegenüber den bekannten elektrochemischen Meßfühlern des Standes der Technik den Vorteil einer erhöhten Elektrodenaktivität auf. Die erfindungsgemäß vorgesehene feinporöse Deckschicht führt zu einer optimalen Ausbildung der 3-Phasengrenze auch in der außen liegenden Grenzfläche der Cermet-Elektrode. Damit ist die Umsetzung der Abgas- bzw. Referenzgaskomponenten auch in diesem Elektrodenbereich gewährleistet, der dem äußeren Gasraum am nächsten zugewandt ist und demzufolge katalytisch und elektrochemisch am meisten beansprucht wird.

Der erfindungsgemäße elektrochemische Meßfühler unterscheidet sich von den bekannten elektrochemischen Meßfühlern nach der Gattung des Hauptanspruches somit durch die zusätzliche Anordnung einer Deckschicht auf der dem zu messenden Gas ausgesetzten Cermet-Elektrode aus einem ionenleitenden, vorzugsweise sinterinaktiven Material, wie es üblicherweise zur Ausbildung des Stützgerüstes von Cermet-Elektroden verwendet wird.

Bei den erfindungsgemäßen elektrochemischen Meßfühlern kann es sich somit um solche mit einem rohrförmigen Sondenstein oder aber auch um planare Meßfühler handeln.

Dies bedeutet, daß der Meßfühlerkörper, z. B. der rohrförmige Sondenstein, aus einem der üblicherweise zur Herstellung von elektrochemischen Meßfühlern verwendeten Festelektrolyten bestehen kann. Gemäß einer vorteilhaften Ausgestaltung der Erfindung besteht der Meßfühlerkörper aus einem keramischen Material auf ZrO₂-Basis, insbesondere stabilisiertem ZrO₂, z. B. des aus der DE-OS 28 10 134 bekannten Typs.

Die Elektroden des erfindungsgemäßen elektrochemischen Meßfühlers können den üblichen bekannten Aufbau aufweisen. Die dem zu messenden Gas ausgesetzte Cermet-Elektrode kann somit beispielsweise aus einer üblichen Pt-Cermet- oder Pt-Legierungs-Cermet-Elektrode bestehen. Das Stützgerüstmaterial dieser Cermet-Elektroden kann beispielsweise aus stabilisiertem ZrO₂ bestehen, wobei der Stabilisierungsgrad des zur Ausbildung der Cermet-Elektrode verwendeten ZrO₂ gegebenenfalls von dem Stabilisierungsgrad des zur Herstellung des Meßfühlerkörpers verwendeten ZrO₂ abweichen kann, wie es aus der DE-PS 28 52 638 bekannt ist.

Zur Ausbildung der Deckschicht kann ein beliebiges ionenleitendes sinterinaktives Stützgerüstmaterial verwendet werden, wie es üblicherweise zur Ausbildung des Stützgerüstes von Cermet-Elektroden verwendet wird. Gemäß einer vorteilhaften Ausgestaltung der Erfindung wird zur Erzeugung der Deckschicht das gleiche sinterinaktive Stützgerüstmaterial verwendet, das auch zur Erzeugung der dem Meßgas ausgesetzten Cermet-Elektrode des erfindungsgemäßen elektrochemischen Meßfühlers verwendet wird. Vorzugsweise bestehen mindestens 80 Vol.-% der Deckschicht aus dem ionenleitenden sinterinaktiven Stützgerüstmaterial. Dies bedeutet, daß die Deckschicht beispielsweise bestehen kann aus teil- oder vollstabilisiertem ZrO₂, ferner aus teil- oder vollstabilisiertem HfO₂ oder aus teil- oder vollstabilisiertem Bi₂O₃.

Außer der ionenleitenden sinterinaktiven Komponente, wie z. B. dem teil- oder vollstabilisiertem ZrO₂ kann die Deckschicht z. B. noch andere temperaturfeste Oxide wie Al₂O₃, Mg-Spinell und/oder Mullit enthalten.

Die Dicke der Deckschicht kann verschieden sein. In vorteilhafter Weise ist sie mindestens 1/2 so dick wie die Cermet-Elektrode und maximal 3 mal so dick wie die Cermet-Elektrode. Dies bedeutet, daß die Deckschicht eine Dicke von vorzugsweise 2,5 bis 30 µm hat.

Die Deckschicht kann nach üblichen bekannten Auftragstechniken auf die Cermet-Elektrode aufgebracht werden, z. B. nach üblichen bekannten Druck-, Tauch- und Spritzverfahren, und zwar vor oder nach dem Schlußsintern des Meßfühlerkörpers.

Feinporös bedeutet, daß die Porosität der Deckschicht der der Cermet-Elektrode entspricht oder ihr wenigstens sehr ähnlich ist und daß die Porendurchmesser nicht größer als die Schichtstärke der Deckschicht sind.

In typischer Weise wird zur Ausbildung der Deckschicht eine Beschichtungsmasse verwendet, die besteht aus:
(a) 30 bis 65 Gew.-% Deckschicht-Rohstoffmischung bestehend aus Festelektrolytoxid und Stabilisatoroxid sowie gegebenenfalls Flußmittelzusatz;
(b) 0,5 bis 7,5 Gew.-% organischem Binder und
(c) 30 bis 68 Gew.-% Lösungsmittel, gegebenenfalls mit Zusätzen wie Netzmittel, Entschäumer, Dispergiermittel und/oder Stellmittel.

Nach dem Auftragen der Deckschicht und Aufsintern derselben erfolgt der Auftrag der porösen Schutzschicht, die in üblicher bekannter Weise beispielsweise aus einer Al₂O₃- und/oder Mg-Spinellschicht bestehen kann und in Plasmaspritztechnik aufgetragen werden kann.

### Zeichnungen

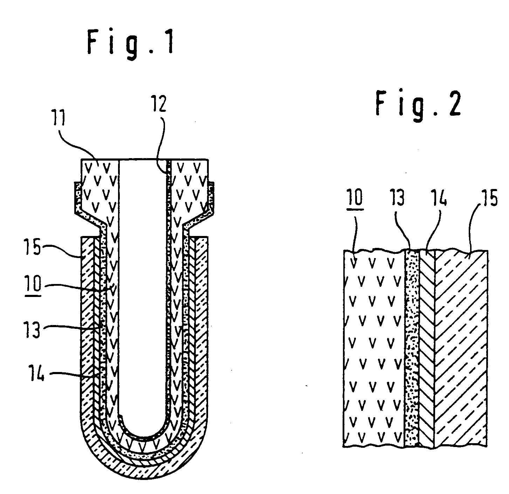

Die Zeichnungen dienen der näheren Erläuterung der Erfindung. Dargestellt sind in
- Fig. 1: der Kopf eines elektrochemischen Meßfühlers im Schnitt und in
- Fig. 2: ein Abschnitt des Meßfühlers gemäß Fig. 1 vergrößert dargestellt.

Der Meßfühlerkopf besteht aus einem einseitig geschlossenen Rohr 10 aus einem Festelektrolyten, z. B. stabilisiertem Zirkondioxid, dessen offenes Ende 11 eine erhöhte Wandstärke aufweist. Auf der Innenwand des Rohres 10 im Luftreferenzkanal befindet sich die Innenelektrode 12, z. B. aus 60 Vol.-% einer Palladium-Platin-Legierung mit 2 Vol.-% Platin und 40 Vol.-% stabilisiertem Zirkondioxid. Auf der Außenwand des Rohres 10 befindet sich die dem Meßgas ausgesetzte Cermet-Elektrode 13, z. B. aus 60 Vol.-% Platin und 40 Vol.-% stabilisiertem Zirkondioxid, darüber die feinporöse ionenleitende Deckschicht 14 und darüber die poröse keramische Schutzschicht 15. Der dargestellte Meßfühlerkopf ist Teil eines üblichen elektrochemischen Meßfühlers, wie er im Prinzip beispielsweise näher beschrieben ist in der DE-PS 29 13 633.

### Beispiel

Der Festelektrolytkörper wurde aus einer teilstabilisierten Zirkonoxidkeramik aus 95 Mol-% ZrO₂ und 5 Mol.-% Y₂O₃ mit einem Zusatz von 3 Gew.-% Al₂O₃ hergestellt und zwei Stunden bei 1100°C vorgesintert. Die Cermet-Elektrode wurde aus einer Suspension mit 60 Vol.-% Platin und 40 Vol.-% eines Y₂O₃-stabilisierten Zirkonoxidpulvers aus einer Rohstoffmischung von 92,5 Mol.-% ZrO₂ und 7,5 Mol.-% Y₂O₃ unter Zusatz von 4 Gew.-% Al₂O₃ hergestellt. Die Keramikkomponenten wurden trocken auf eine spezifische Oberfläche von 11 m²/g vorgemahlen und dann zusammen mit dem Platinpulver mit einem Verdünnungsöl in einer Zentrifugal-Kugelmühle gemahlen. Diese Suspension wurde dann in bekannter Weise durch Aufsprühen, Aufstreichen, Aufrollen, Tauchen, Walzen, Gießen oder Drucken in einer Schichtdicke von 10 bis 30 µm auf den vorgesinterten Festelektrolyt-Sensorkörper aufgebracht und getrocknet.

Die ionenleitende porös sinternde Deckschicht wurde ausgehend von einer Beschichtungsmasse aus einer Rohstoffmischung von 92,5 Mol-% ZrO₂ und 7,5 Mol-% Y₂O₃ unter Zusatz von 4 Gew.-% Al₂O₃ durch Aufsprühen, Aufstreichen oder Aufdrucken in einer Schichtstärke von 5 bis 15µm auf die Cermet-Elektrode aufgebracht. Daran anschließend wurde der beschichtete Festelektrolytkörper in oxidierender Atmosphäre bei 1500°C mit einer Haltzeit von 5 Stunden gesintert. Auf die Deckschicht wurde dann noch eine poröse keramische Schutzschicht aus Mg-Spinell-Pulver durch Plasmaspritzen aufgebracht.

Der so hergestellte Meßfühler zeigte bei Vergleichsmessungen bereits ab 285°C Abgastemperatur eine ausreichende Sensorfunktion während diese von Sensoren ohne erfindungsgemäße Elektrodendeckschicht erst oberhalb 330°C erreicht wurde.

## Patentansprüche

1. Elektrochemischer Meßfühler für die Bestimmung des Sauerstoffgehaltes in Gasen, insbesondere in Abgasen von Verbrennungsmotoren, aus einem Festelektrolytkörper mit mindestens einer Cermet-Elektrode auf der dem zu messenden Gas ausgesetzten Seite des Festelektrolytkörpers, die ein Stützgerüst aus einem feinteiligen ionenleitenden Keramikmaterial aufweist sowie mit einer porösen keramischen Schutzschicht auf der dem zu messenden Gas ausgesetzten Cermet-Elektrode, dadurch gekennzeichnet, daß zwischen der Cermet-Elektrode (13) und der porösen keramischen Schutzschicht (15) zusätzlich eine feinporöse ionenleitende Deckschicht (14) angeordnet ist, die wenigstens zum überwiegenden Teil aus einem ionenleitenden, vorzugsweise sinterinaktiven Stützgerüstmaterial des für Cermet-Elektroden üblichen Typs besteht.

2. Meßfühler nach Anspruch 1, dadurch gekennzeichnet, daß die feinporöse Deckschicht (14) wenigstens zum überwiegenden Teil aus dem gleichen ionenleitenden, sinterinaktiven Stützgerüstmaterial besteht, das auch zum Aufbau der dem zu messenden Gas ausgesetzten Cermet-Elektrode (13) verwendet wurde.

3. Meßfühler nach Anspruch 1 oder 2, dadurch gekennzeichnet, daß die feinporöse Deckschicht (14) zu mindestens 80 Vol.-% aus dem ionenleitenden sinterinaktiven Stützgerüstmaterial des für Cermet-Elektroden üblichen Typs besteht.

4. Meßfühler nach einem der Ansprüche 1 bis 3, dadurch gekennzeichnet, daß die feinporöse ionenleitende Deckschicht (14) mindestens 1/2 und maximal 3 mal so dick wie die Cermet-Elektrode (13) ist.

5. Meßfühler nach einem der Ansprüche 1 bis 4, dadurch gekennzeichnet, daß das Stützgerüstmaterial aus stabilisiertem Zirkondioxid besteht.

6. Meßfühler nach einem der Ansprüche 1 bis 5, dadurch gekennzeichnet, daß das Stützgerüstmaterial aus vollstabilisiertem Zirkondioxid besteht.

## Claims

1. Electrochemical measuring probe for determining the oxygen content of gases, in particular of exhaust gases of internal combustion engines, comprising a solid-electrolyte body having at least one cermet electrode on the side of the solid-electrolyte body exposed to the gas to be measured, which side has a supporting matrix composed of a finely divided ion-conducting ceramic material, and having a porous ceramic protective layer on the cermet electrode exposed to the gas to be measured, characterised in that, between the cermet electrode (13) and the porous ceramic protective layer (15) there is additionally disposed a finely porous ion-conducting covering layer (14) which consists, at least predominantly, of an ion-conducting supporting matrix material, preferably having no sintering inactivity, of the type standard for cermet electrodes.

2. Measuring probe according to Claim 1, characterised in that the finely porous covering layer (14) consists, at least predominantly, of the same ion-conducting supporting matrix material having no sintering inactivity which was also used to construct the cermet electrode (13) exposed to the gas to be measured.

3. Measuring probe according to Claim 1 or 2, characterised in that the finely porous covering layer (14) consists to at least 80% by volume of the ion-conducting supporting matrix material having no sintering inactivity of the type standard for cermet electrodes.

4. Measuring probe according to one of Claims 1 to 3, characterised in that the finely porous ion-conducting covering layer (14) is at least 1/2, and not more than 3 times, as thick as the cermet electrode (13).

5. Measuring probe according to one of Claims 1 to 4, characterised in that the supporting matrix material consists of stabilised zirconium dioxide.

6. Measuring probe according to one of Claims 1 to 5, characterised in that the supporting matrix material consists of completely stabilised zirconium dioxide.

## Revendications

1. Capteur électrochimique servant à déterminer la teneur en oxygène dans les gaz, en particulier de gaz d'échappement de moteurs à combustion interne, comprenant un corps fait d'un électrolyte solide, portant sur sa face exposée aux gaz à mesurer, une électrode-cermet constituée d'une armature en matériau céramique à particules fines conductrices ioniques enveloppée d'une couche de protection en céramique poreuse, en regard des gaz à mesurer, caractérisé en ce qu'entre l'électrode-cermet (13) et la couche de protection en céramique poreuse (15) est intercalée une couche supplémentaire de recouvrement (14), finement poreuse et conductrice ionique, constituée en grande partie au moins à partir d'un matériau d'armature conducteur ionique, de préférence à inactivité de frittage, du type usuellement utilisé pour réaliser les électrodes-cermet.

2. Capteur selon la revendication 1, caractérisé en ce que la couche de recouvrement (14) finement poreuse est constituée au moins en grande partie du matériau d'armature, conducteur ionique et à inactivité de frittage, utilisé pour l'électrode-cermet exposé au gaz objet de la mesure.

3. Capteur selon la revendication 2, caractérisé en ce que la couche de recouvrement (14) finement poreuse est constituée, pour au moins 80 % (en volume) du matériau d'armature, conducteur ionique et à inactivité de frittage, utilisé usuellement pour réaliser des électrodes-cermet.

4. Capteur selon une des revendications 1 à 3, caractérisé en ce que la couche de couverture (14) finement poreuse et conductrice ionique a une épaisseur comprise entre la moitié et le triple de celle de l' électrode-cermet.

5. Capteur selon une des revendications l à 4, caractérisé en ce que le matériau d'armature est composé de dioxyde de zirconium stabilisé.

6. Capteur selon une des revendications l à 5, caractérisé en ce que le matériau d'armature est composé de dioxyde de zirconium entièrement stabilisé.
